# EUROPEAN PATENT APPLICATION

(11) **EP 3 754 861 A1**
(43) Date of publication of application: **23.12.2020**
(21) Application number: 18918540.8
(22) Date of filing: 17.05.2018
(51) Int. Cl.: H04B 7/0413, H04B 7/06

(54) **RADIO COMMUNICATION DEVICE AND RADIO COMMUNICATION METHOD**

(71) Applicant: Mitsubishi Electric Corporation, Tokyo 100-8310 (JP)
(72) Inventor: UCHIDA, Shigeru, Tokyo 100-8310 (JP)
(74) Representative: Pfenning, Meinig & Partner mbB
(86) International application number: PCT/JP2018/019131
(87) International publication number: WO 2019/220594

(57) **Abstract**

A radio communication device (1) includes: a transmission/reception unit (30) capable of spatially multiplexing signals to be transmitted to a plurality of counterpart devices with one frequency, and transmitting the signals at the same time, by using a hybrid beamforming method combining analog beamforming and digital precoding, the counterpart devices being counterpart radio communication devices; and a control unit (20) to determine a number of transmission array(s) to be allocated to each of the counterpart devices and a number of transmission(s) of reference signal(s) to be transmitted to each of the counterpart devices on the basis of channel state information fed back from each of the counterpart devices.

## Description

### Field

The present invention relates to a radio communication device and a radio communication method using multiuser multi-input multi-output (MIMO).

### Background

For realization of the fifth generation mobile communication system (5G), use of high frequency bands such as the super high frequency (SHF) band and the extremely high frequency (EHF) band, and use of a broadband have been studied. The massive MIMO technology using large-scale antenna arrays have attracted attention as a technology for reducing propagation loss in the high frequency bands and improving frequency use efficiency. Because the massive MIMO technology uses the large number of transmission antennas, the throughput increases when one digital stream process corresponds to one antenna element. Thus, implementation of massive MIMO by using the hybrid beamforming method combining digital precoding and analog beamforming that forms beams with phased array antennas, can be considered. When the hybrid beamforming method is used, streams are processed in units of beams, which enables significant reduction in the throughput.

When beamforming is used, a technology called rank adaptation is used in which wireless terminals feed channel state information (CSI) back to a radio base station, and the radio base station changes the number of transmission arrays to be allocated to each of the wireless terminals depending on the channel states between the radio base station and the wireless terminals, for improving multiplexing gain. The rank adaptation is also adopted in Third Generation Partnership Project (3GPP) Long Term Evolution (LTE) standard specifications, for example.

Patent Literature 1 discloses a method in which wireless terminals inform a radio base station that includes large-scale antenna arrays of channel state information. In the radio communication system taught in Patent Literature 1, effective antenna arrays are set from among large-scale antenna arrays, reference signals associated with the effective antenna arrays are transmitted from the radio base station, and the wireless terminals generate channel state information by using the reference signals, and feed back the generated channel state information to the radio base station.

In addition, a technology called multiuser MIMO is used for spatial multiplexing between wireless terminals as a method for increasing the number of spatial multiplexes. The multiuser MIMO is also adopted in the 3GPP LTE standard specifications. In a multiuser MIMO system, transmissions from a radio base station to a plurality of wireless terminals can be performed at the same time in one radio frequency band.

### Citation List

### Patent Literature

Patent Literature 1: Translation of PCT International Application Laid-open No. 2016-519537

### Summary

### Technical Problem

As described in Patent Literature 1, however, when the rank adaptation is applied to a multiuser MIMO system using the hybrid beamforming method, analog beams corresponding to the maximum rank number supported by a wireless terminal are directed to the wireless terminal, and reference signals, the number of which corresponds to the number of beams, then need to be transmitted. Thus, as the number of wireless terminals subjected to spatial multiplexing increases, the maximum rank number supported by the wireless terminals increases, and the number of transmissions of reference signals increases, which is problematic in increasing radio resources consumed for transmission of the reference signals.

The present invention has been made in view of the above, and an object thereof is to provide a radio communication device capable of reducing radio resources consumed for transmission of reference signals when rank adaptation is applied to a multiuser MIMO system using the hybrid beamforming method.

### Solution to Problem

To solve the problem and achieve an object, a radio communication device according to the present invention includes: a transmission/reception unit capable of spatially multiplexing signals to be transmitted to a plurality of counterpart devices with one frequency, and transmitting the signals at the same time, by using a hybrid beamforming method combining analog beamforming and digital precoding, the counterpart devices being counterpart radio communication devices; and a control unit to determine a number of transmission array(s) to be allocated to each of the counterpart devices and a number of transmission(s) of reference signal(s) to be transmitted to each of the counterpart devices on the basis of channel state information fed back from each of the counterpart devices.

### Advantageous Effects of Invention

A radio communication device according to the present invention produces an effect of enabling reduction in radio resources consumed for transmission of reference signals when rank adaptation is applied to a multiuser MIMO system using the hybrid beamforming method.

### Brief Description of Drawings

FIG. 1 is a diagram illustrating a configuration of a radio communication system according to a first embodiment of the present invention.
FIG. 2 is a diagram illustrating a configuration of a radio base station illustrated in FIG. 1.
FIG. 3 is a flowchart illustrating the operation of an MAC processing unit illustrated in FIG. 2.
FIG. 4 is a diagram illustrating a hardware configuration for implementing components of the radio base station illustrated in FIG. 2.
FIG. 5 is a flowchart illustrating the operation of an MAC processing unit according to a second embodiment of the present invention.
FIG. 6 is a diagram illustrating a configuration of a radio base station according to a third embodiment of the present invention.
FIG. 7 is a flowchart illustrating the operation of an MAC processing unit according to the third embodiment.

### Description of Embodiments

A radio communication device and a radio communication method according to embodiments of the present invention will be described in detail below with reference to the drawings. Note that the present invention is not limited to the embodiments.

### First Embodiment.

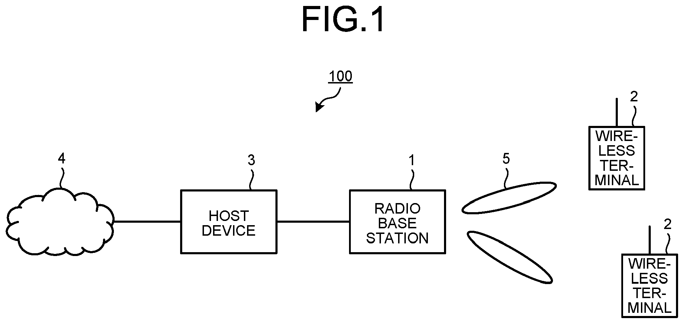

FIG. 1 is a diagram illustrating a configuration of a radio communication system 100 according to a first embodiment of the present invention. The radio communication system 100 includes a radio base station 1, wireless terminals 2, and a host device 3. Note that, for description of a specific example of application of a radio communication device according to the present invention, a case where the radio communication device is the radio base station 1 is presented in FIG. 1.

The radio base station 1 is a radio communication device capable of forming transmission beams 5 toward a plurality of wireless terminals 2 by using a plurality of antennas, and communicating with wireless terminals 2, which are counterpart devices, by using one or more transmission beams 5.

The wireless terminals 2 are terminal devices each including a plurality of antennas, and capable of receiving signals transmitted from the radio base station 1 using transmission beams 5. While two wireless terminals 2 are illustrated in FIG. 1, the present invention is not limited to this example, and two or more wireless terminals 2 can communicate with the radio base station 1 at the same time.

The host device 3 is a device connected with a core network, and examples thereof include a gateway, a mobility management entity (MME), and the like.

The radio base station 1 is connected with the host device 3 via communication lines, and the host device 3 is connected with a network 4. The network 4 is a network different from a radio communication network and includes the radio base station 1, the wireless terminals 2 and the host device 3.

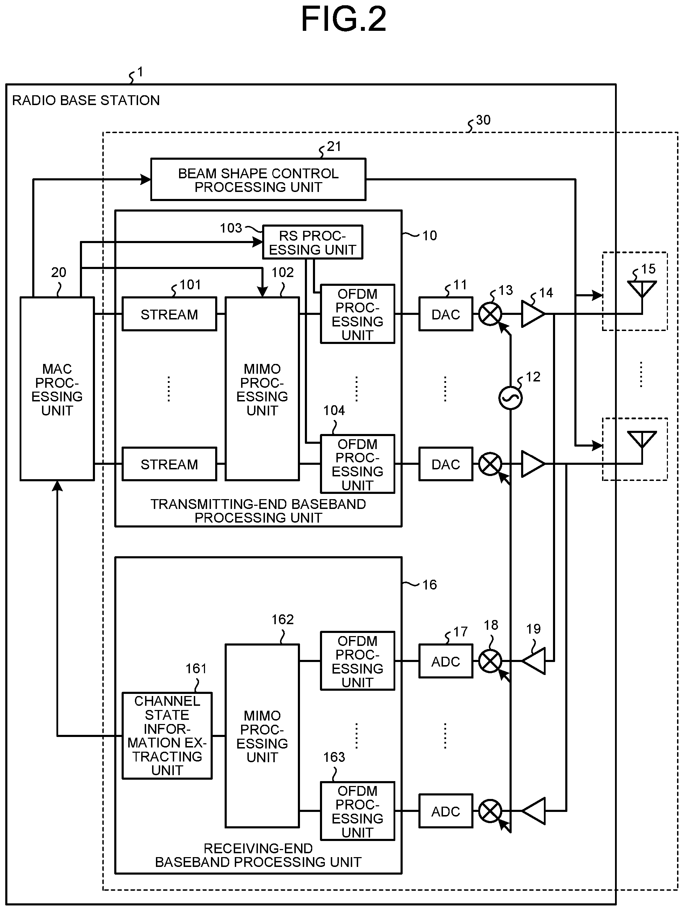

FIG. 2 is a diagram illustrating a configuration of the radio base station 1 illustrated in FIG. 1. Note that, in FIG. 2, only main components of the radio base station 1 are illustrated, and components relating to processes that are not directly related to achievement of the invention according to the present embodiment, such as components relating to processes for communication with the host device 3 are not illustrated. In addition, FIG. 2 illustrates the radio base station 1 that performs orthogonal frequency division multiplexing (OFDM) processes.

The radio base station 1 includes a transmitting-end baseband processing unit 10, a plurality of digital-to-analog converters (DACs) 11, a local oscillator 12, a plurality of mixers 13, a plurality of power amplifiers (PAs) 14, a plurality of antennas 15, a receiving-end baseband processing unit 16, a plurality of analog-to-digital converter (ADCs) 17, a plurality of mixers 18, a plurality of low noise amplifiers (LNAs) 19, a media access control (MAC) processing unit 20, and a beam shape control processing unit 21. Note that the transmitting-end baseband processing unit 10, the DACs 11, the local oscillator 12, the mixers 13, the PAs 14, the antennas 15, the receiving-end baseband processing unit 16, the ADCs 17, the mixers 18, the LNAs 19, and the beam shape control processing unit 21 constitute a transmission/reception unit 30.

Note that the antennas 15 are multi-element antennas with controllable array direction, such as active phased array antennas. While a mode in which the antennas 15 are constituted by a plurality of array antennas is presented in the present embodiment, the antennas 15 may be constituted by one array antenna. The radio base station 1 also provides functions of spatially multiplexing signals addressed to a plurality of wireless terminals 2, and simultaneously transmitting the multiplexed signals to the wireless terminals 2. The functions include multiuser MIMO and single-user MIMO.

The transmitting-end baseband processing unit 10 includes a MIMO processing unit 102, an RS processing unit 103, and a plurality of OFDM processing units 104. A plurality of streams 101 from the MAC processing unit 20 are input to the MIMO processing unit 102. The MIMO processing unit 102 performs MIMO processing including precoding and the like on the streams 101, which are a group of signal streams transmitted in spatial multiplexing toward the wireless terminals 2. The streams 101 are data strings to be spatially multiplexed and transmitted, which includes streams that are to be transmitted to different wireless terminals 2. The precoding refers to a process of weighting by multiplying the streams 101 by transmission weights, by which transmission signals are distributed to the antennas 15.

The MIMO processing unit 102 acquires channel state information on channels between the radio base station 1 and the wireless terminals 2 from the MAC processing unit 20, which will be described later, and then calculates the transmission weights. In this process, the MAC processing unit 20, which will be described later, informs the MIMO processing unit 102 of a combination of wireless terminals 2 subjected to the acquisition and calculation. The MIMO processing unit 102 inputs signals obtained by the MIMO processing to each of the OFDM processing units 104.

The RS processing unit 103 generates a signal pattern of a reference signal such as a demodulation reference signal (DMRS), and a channel state information reference signal (CSI-RS). In this process, the resource setting of the reference signal to be transmitted is indicated to the RS processing unit 103 by the MAC processing unit 20, which will be described later. The RS processing unit 103 inputs the generated signal to each of the OFDM processing units 104.

The OFDM processing units 104 perform resource element mapping, modulation, inverse fast Fourier transform (IFFT), cyclic prefix (CP) addition, and the like on signals input from the MIMO processing unit 102 and the RS processing unit 103, and generates transmission signals to be transmitted to the wireless terminals 2. In resource element mapping, each of input signals is mapped to resource elements specified by OFDM symbol numbers or subcarrier numbers on the basis of a specified rule or the like. In modulation, input signals are modulated using a modulation method such as quadrature phase shift keying (QPSK) and quadrature amplitude modulation (QAM). The OFDM processing units 104 input the generated transmission signals to the DACs 11.

The DACs 11 convert the transmission signals generated by the transmitting-end baseband processing unit 10 from digital signals to analog signals. The DACs 11 input the analog signals obtained by the conversion to the mixers 13.

The mixers 13 up-convert the analog signals input from the DACs 11 to carrier frequency on the basis of a local oscillation signal output from the local oscillator 12. The mixers 13 input the processed signals to the PAs 14.

The PAs 14 amplify the transmission power of the analog signals input from the mixers 13. The transmission signals output from the PAs 14 are transmitted as radio waves from the antennas 15. Note that a method of performing conversion to intermediate frequency and then performing up-conversion to carrier frequency may be used, for example. In the present embodiment, components for intermediate processing are schematically illustrated in a simplified manner. The same applies to the receiving end.

Note that the array directions of the antennas 15 are controlled on the basis of settings indicated by the beam shape control processing unit 21. Furthermore, the antennas 15 receive signals transmitted from the wireless terminals 2. The signals received by the antennas 15 are input to the mixers 18 via the LNAs 19.

The mixers 18 down-convert the received analog signals with carrier frequency, which are input from the antennas 15, to signals with baseband frequency on the basis of the local oscillation signal output from the local oscillator 12. The mixers 18 input the received signals resulting from the down-conversion to the ADCs 17. The ADCs 17 convert the received analog signals with baseband frequency input from the mixers 18 into digital signals. The ADCs 17 input the digital signals obtained by the conversion to the receiving-end baseband processing unit 16.

The receiving-end baseband processing unit 16 includes a channel state information extracting unit 161, a MIMO processing unit 162, and OFDM processing units 163. The receiving-end baseband processing unit 16 processes the received signals received from the wireless terminals 2 via the antennas 15, the LNAs 19, the mixers 18, and the ADCs 17 to restore data transmitted from the wireless terminals 2.

The OFDM processing units 163 demodulate the received signals input from the ADCs 17 by performing CP removal, FFT, demodulation, and the like. The OFDM processing units 163 input the processed received signals to the MIMO processing unit 162.

The MIMO processing unit 162 obtains weighted combination of the demodulated received signals input from the OFDM processing units 163. The MIMO processing unit 162 performs transmission path estimation on the basis of reference signals included in the received signals from the wireless terminals 2, for example, calculates weights of the received signals input from the OFDM processing units 163 from transmission path estimation values obtained as a result of the transmission path estimation, performs weighting by multiplying the received signals by the calculated weights, and then combines the weighted received signals. The MIMO processing unit 162 inputs the received signal obtained by the combining to the channel state information extracting unit 161.

The channel state information extracting unit 161 extracts channel state information fed back by the wireless terminals 2 from demodulated data included in the received signal input from the MIMO processing unit 162, and inputs the extracted channel state information to the MAC processing unit 20.

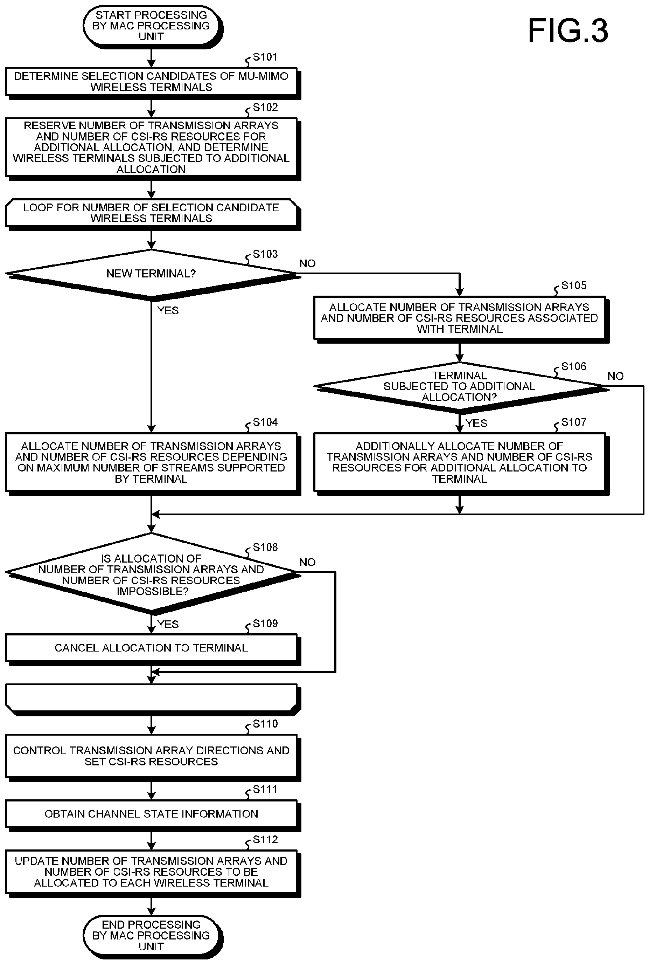

The MAC processing unit 20 is a control unit that determines the number of transmission arrays to be allocated to each of the wireless terminals 2 and the number of transmissions of reference signals to be transmitted to each of the wireless terminals 2 on the basis of the channel state information fed back from each of the wireless terminals 2. Hereinafter, details of the operation of the MAC processing unit 20 will be explained with reference to FIG. 3.

Note that the explanation below will be focused on operation of setting resources to be used for transmission of a CSI-RS to be given to the RS processing unit 103 of the transmitting-end baseband processing unit 10 and operation relating to array direction control information to be given to the beam shape control processing unit 21 among the operation of the MAC processing unit 20. In addition, as a premise, assume that a connecting process between the radio base station 1 and each of the wireless terminals 2 has been performed, and that the array directions of the antennas 15 controlled by the radio base station 1 are appropriately determined for the wireless terminals 2. An example of a method for determining the array directions of the antennas 15 is transmitting a synchronization signal or a CSI-RS from the radio base station 1 to search for appropriate array directions of the wireless terminals 2 with respect to the radio base station 1, and feeding back identification information indicating an array direction at which the signal to interference plus noise ratio (SINR) observed by each of the wireless terminals 2 becomes maximum from each of the wireless terminals 2 to the radio base station 1 in advance. Furthermore, assume that the radio base station 1 has obtained wireless terminal capability information such as a maximum number of MIMO streams supported by each of the wireless terminals 2.

FIG. 3 is a flowchart illustrating the operation of the MAC processing unit 20 illustrated in FIG. 2. First, the MAC processing unit 20 determines candidates of wireless terminals 2 to be selected for performing multiuser MIMO at intervals of a predetermined scheduling time (step S101). In an example, the candidates for selection is determined on the basis of a channel quality indicator (CQI), which is a value indicating the reception quality of a channel obtained from each of the wireless terminals 2, priority set on each of the wireless terminals 2, a buffer amount of transmission data to each of the wireless terminals 2, or the like.

The MAC processing unit 20 reserves the number of transmission arrays and the number of CSI-RSs to be additionally allocated in step S107, which will be described later, and determines wireless terminals 2 to which the transmission arrays and the CSI-RS resources are to be additionally allocated, before allocating transmission arrays and CSI-RS resources to the selected wireless terminals 2 (step S102). The number of transmission arrays and the number of CSI-RSs to be reserved may be preset numbers such as 1, for example, or may be values proportional to wireless terminal capacity of a wireless terminal 2 subjected to additional allocation, such as values proportional to the maximum number of MIMO streams supported by the wireless terminals 2. The MAC processing unit 20 can also set a time period for wireless terminals 2 in an active communication state, and determine wireless terminals 2 selected in step S101 after the time period elapsed to be the wireless terminals 2 subjected to additional allocation at the timing of selection.

Subsequently, the MAC processing unit 20 determines for each of the wireless terminals 2 determined to be candidates to be selected in step S101, whether or not the subject wireless terminal 2 is a new terminal that newly starts communication (step S103). If the subject wireless terminal 2 is a new terminal (step S103: Yes), the MAC processing unit 20 allocates the number of transmission arrays and the number of transmissions of CSI-RSs to the wireless terminal 2 on the basis of the maximum number of MIMO streams supported by the wireless terminal 2 (step S104). If the subject wireless terminal 2 is not a new terminal, that is, the subject wireless terminal 2 is a terminal that continues communication (step S103: No), the MC processing unit 20 allocates the number of transmission arrays and the number of transmissions of CSI-RSs determined in advance in step S112 which will be described later, to the subject wireless terminal 2 (step S105).

Subsequently, the MAC processing unit 20 determines whether or not the subject wireless terminal 2 is a terminal subjected to additional allocation (step S106). In this process, the determination is made using the information on the wireless terminals subjected to additional allocation determined in step S102. If the subject wireless terminal 2 is a terminal subjected to additional allocation (step S106: Yes), the MAC processing unit 20 additionally allocates the number of transmission arrays and the number of transmissions of CSI-RSs for additional allocation which have been reserved in step S102, to the subject wireless terminal 2 (step S107). If the subject wireless terminal 2 is not a terminal subjected to additional allocation (step S106: No), the process in step S107 is omitted.

Subsequently, the MAC processing unit 20 determines whether or not allocation of the number of transmission arrays and the number of transmissions of CSI-RSs is impossible, that is, whether or not the number of transmission arrays and the number of transmissions of CSI-RSs have reached an upper limit (step S108). If the allocation is impossible (step S108: Yes), the MAC processing unit 20 cancels the allocation to the subject wireless terminal 2 made in step S104 or in steps S105 and S107, and removes the subjected wireless terminal 2 from the selection candidates determined in step S101 (step S109). If the allocation is possible (step S108: No), the process in step S109 is omitted.

The processes from step S103 to step S109 described above are repeated for the number of times corresponding to the number of selection candidate wireless terminals 2. When the processes are completed for all the selection candidates, the MAC processing unit 20 generates CSI-RS resource setting information and array direction control information for setting resources to be used for transmitting CSI-RSs on the basis of the number of transmission arrays and the number of transmissions of CSI-RSs allocated to each wireless terminal 2. The MAC processing unit 20 informs the RS processing unit 103 of the transmitting-end baseband processing unit 10 of the CSI-RS resource setting information, and informs the beam shape control processing unit 21 of the array direction control information at the timing of transmission of a radio signal to each wireless terminal 2 (step S110).

Thereafter, when the CSI-RSs are transmitted to each of the wireless terminals 2 on the basis of the CSI-RS resource setting information and the array direction control information, the MAC processing unit 20 obtains channel state information fed back from each of the wireless terminals 2 (step S111). The MAC processing unit 20 then updates the number of transmission arrays and the number of transmissions of CSI-RSs to be allocated to each of the wireless terminals 2 on the basis of the obtained channel state information (step S112). For example, the MAC processing unit 20 can simply set the number of transmission arrays and the number of transmissions of CSI-RSs to the same number as a rank number indicated by a rank indicator (RI) included in the channel state information.

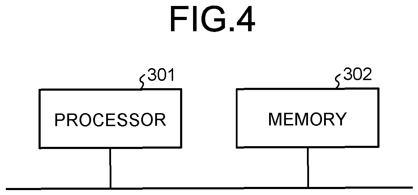

FIG. 4 is a diagram illustrating a hardware configuration for implementing components of the radio base station 1 illustrated in FIG. 2. A processor 301 is, specifically, a central processing unit (CPU; also referred to as a central processing device, a processing device, a computing device, a microprocessor, a microcomputer, a processor or a digital signal processor (DSP)), a system large scale integration (LSI), or the like. A memory 302 is a nonvolatile or volatile semiconductor memory such as a random access memory (RAM), a read only memory (ROM), a flash memory, an erasable programmable ROM (EPROM), or an electrically EPROM (EEPROM; registered trademark), a magnetic disk, a flexible disk, an optical disk, a compact disc, a mini disc, a digital versatile disk (DVD), or the like, for example. The processor 301 can implement various functions by reading and executing computer programs stored in the memory 302.

The MIMO processing unit 102 of the transmitting-end baseband processing unit 10 is implemented by electronic circuitry that performs precoding on the input streams 101 or by a combination of electronic circuitry, the processor 301, and the memory 302.

The RS processing unit 103 is electronic circuitry that performs RS signal generation or the like. The OFDM processing units 104 is electronic circuitry that performs modulation, IFFT, CP addition, and the like on signals input from the MIMO processing unit 102.

The MIMO processing unit 162 of the receiving-end baseband processing unit 16 is implemented by electronic circuitry that obtains weighted combination of received signals input from the respective OFDM processing units 163 or by a combination of electronic circuitry, the processor 301, and the memory 302.

The OFDM processing units 163 are each electronic circuitry that performs CP removal, FFT, demodulation, and the like on signals input from the ADCs 17. The channel state information extracting unit 161 is implemented by electronic circuitry or by a combination of electronic circuitry, the processor 301, and the memory 302. In addition, the MAC processing unit 20 and the beam shape control processing unit 21 are each implemented by a combination of electronic circuitry, the processor 301, and the memory 302.

As described above, according to the first embodiment of the present invention, when rank adaptation is applied to a multiuser MIMO system using the hybrid beamforming method, the number of transmission arrays and the number of transmissions of CSI-RSs, which are reference signals, are determined on the basis of channel state information. This enables the number of transmissions of reference signals to be adaptively determined depending on the channel states, which reduces radio resources consumed to transmit the reference signals. In addition, because the number of transmission arrays can be adaptively determined depending on the channel states, the effect of rank adaptation is achieved, which improves the frequency use efficiency.

### Second Embodiment.

The radio base station 1 according to a second embodiment of the present invention has a configuration similar to that in a first embodiment illustrated in FIG. 2, and the description thereof is thus not be repeated here. In addition, reference numerals used in FIG. 2 will be used in the description below.

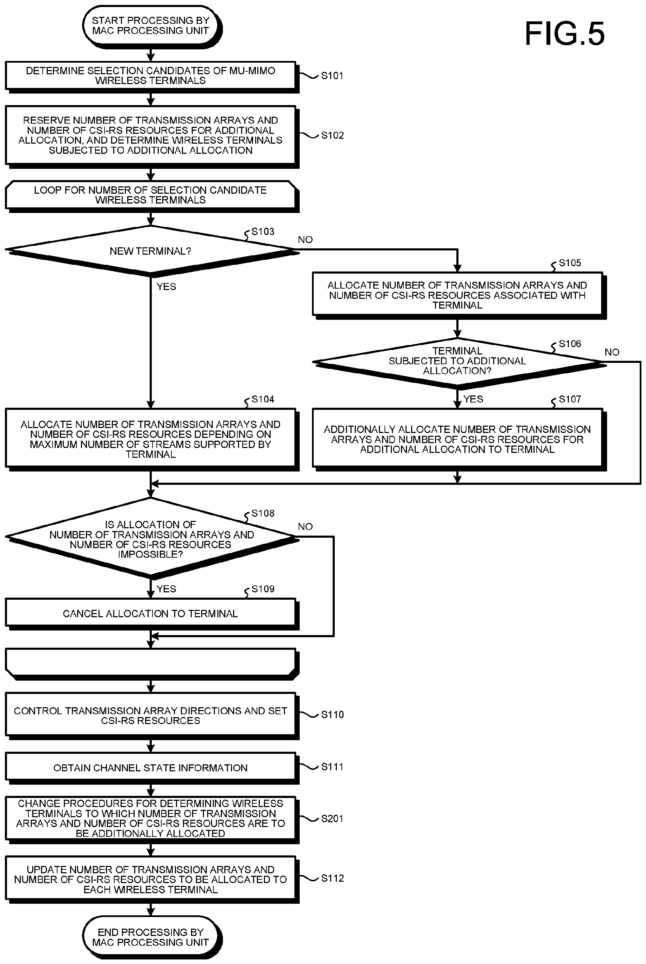

FIG. 5 is a flowchart illustrating the operation of the MAC processing unit 20 according to the second embodiment of the present invention. The processes in steps S101 to S112 are similar to those in FIG. 3. After obtaining the channel state information in step S111, the MAC processing unit 20 changes procedures for determining the wireless terminals 2 to which the number of transmission arrays and the number of transmission of reference signals are to be additionally allocated on the basis of the channel state information (step S201).

For example, when the rank number indicated by the RI is equal to or smaller than a predetermined threshold, when the SINR value obtained from the CQI is equal to or lower than a predetermined threshold, and the channel state between the radio base station 1 and a wireless terminal 2 is determined to not to be good, or when the SINR value is equal to or higher than the predetermined threshold and the channel state between the radio base station 1 and a wireless terminal 2 is determined to be good, the MAC processing unit 20 can change the procedures for determining the wireless terminals 2 subjected to additional allocation. Alternatively, when a variance of a value indicating the channel state, such as the RI and the SINR, obtained within a predetermined time exceeds a threshold and the fluctuation in the channel state between the radio base station 1 and a wireless terminal 2 is thus determined to be large, the MAC processing unit 20 can change the procedures for determining the wireless terminals 2 subjected to additional allocation.

The change in the determination procedures may be such that the additional allocation of the number of transmission arrays and the number of transmissions of reference signals to the subject wireless terminal 2 is performed in step S102 of the next processing, or that the time period explained with reference to step S102 is shortened, for example. In addition, when the condition for changing the determination procedures is no longer met, the MAC processing unit 20 may return the determination procedures to the original procedures.

Because the timing for allocating the number of transmission arrays and the number of transmissions of reference signals to each wireless terminal 2 can be changed depending on the channel state, the rank adaptation can be performed at appropriate timing, which improves the frequency use efficiency.

### Third Embodiment.

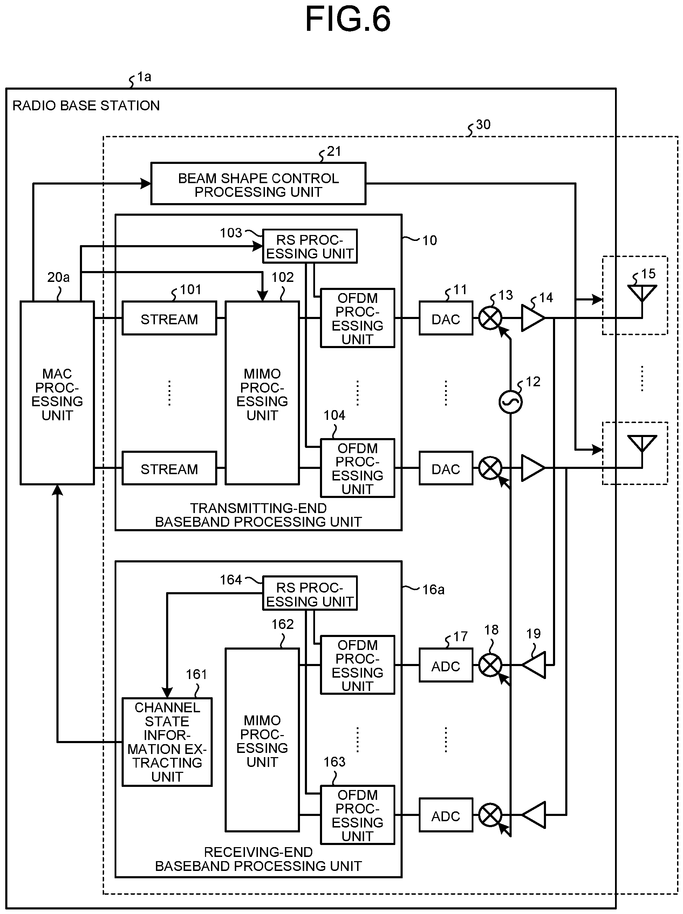

FIG. 6 is a diagram illustrating a configuration of a radio base station 1a according to a third embodiment of the present invention. The radio base station 1a includes a transmitting-end baseband processing unit 10, a plurality DACs 11, a local oscillator 12, a plurality of mixers 13, a plurality of PAs 14, a plurality of antennas 15, a receiving-end baseband processing unit 16a, a plurality of ADCs 17, a plurality of mixers 18, a plurality of LNAs 19, an MAC processing unit 20a, and a beam shape control processing unit 21.

Differences from the first embodiment will be mainly described below. The radio base station 1a includes the receiving-end baseband processing unit 16a instead of the receiving-end baseband processing unit 16 of the radio base station 1. The receiving-end baseband processing unit 16a includes an RS processing unit 164 in addition to the channel state information extracting unit 161, the MIMO processing unit 162 and the OFDM processing units 163.

The OFDM processing units 163 perform various processes on received signals input from the ADCs 17, and also receive sounding reference signals (SRS) from wireless terminals 2 and inform the RS processing unit 164 of the SRSs.

The RS processing unit 164 calculates transmission path estimation values from the SRSs received from the OFDM processing units 163, and inputs the calculated transmission path estimation values to the channel state information extracting unit 161. The channel state information extracting unit 161 calculates channel state information from the transmission path estimation values, and inputs the calculated channel state information to the MAC processing unit 20a.

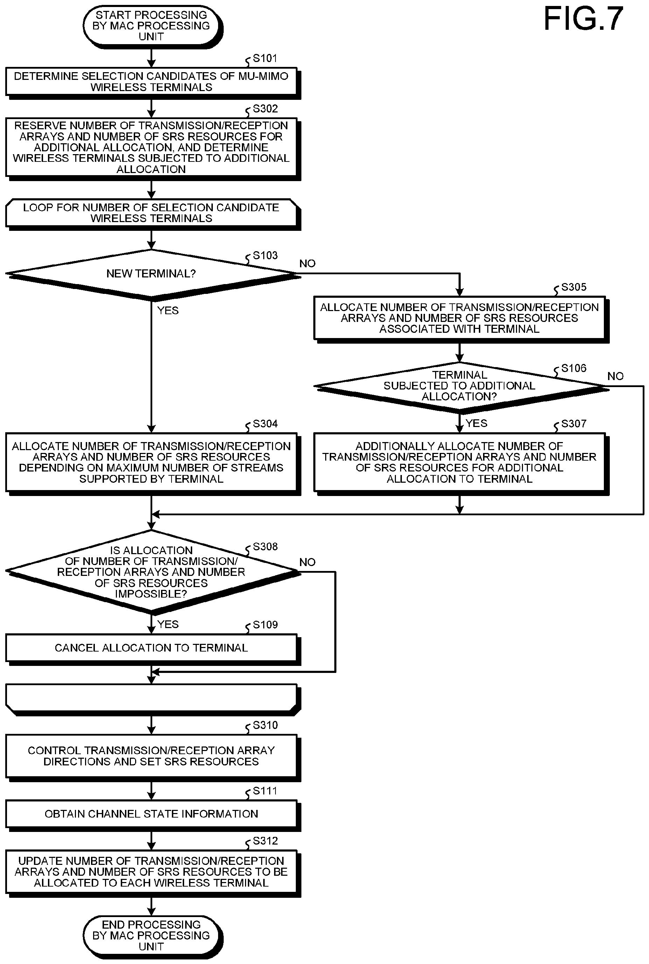

FIG. 7 is a flowchart illustrating the operation of the MAC processing unit 20a according to the third embodiment. The operations in steps S302, S304, S305, S307, S308, S310, and S312 in FIG. 7 are different from steps S102, S104, S105, S107, S108, S110, and S112 in using the number of transmission/reception arrays instead of the number of transmission arrays and using the number of SRS resources instead of the number of CSI-RS resources.

As described above, according to the third embodiment of the present invention, when rank adaptation is applied to a multiuser MIMO system using the hybrid beamforming method, the number of transmission/reception arrays and the number of transmissions of SRSs, which are reference signals, are determined on the basis of channel state information. This enables the number of transmissions of reference signals to be adaptively determined depending on the channel states, which reduces radio resources consumed to transmit the reference signals. In addition, because the number of transmission/reception arrays can be adaptively determined depending on the channel states, the effect of rank adaptation is achieved, which improves the frequency use efficiency.

The configurations presented in the embodiments above are examples of the present invention, and can be combined with other known technologies or can be partly omitted or modified without departing from the scope of the present invention.

### Reference Signs List

1, 1a radio base station; 2 wireless terminal; 3 host device; 4 network; 5 transmission beam; 10 transmitting-end baseband processing unit; 11 DAC; 12 local oscillator; 13, 18 mixer; 14 PA; 15 antenna; 16, 16a receiving-end baseband processing unit; 17 ADC; 19 LNA; 20, 20a MAC processing unit; 21 beam shape control processing unit; 30 transmission/reception unit; 100 radio communication system; 101 stream; 102, 162 MIMO processing unit; 103, 164 RS processing unit; 104, 163 OFDM processing unit; 161 channel state information extracting unit; 301 processor; 302 memory.

## Claims

1. A radio communication device comprising:
a transmission/reception unit capable of spatially multiplexing signals to be transmitted to a plurality of counterpart devices with one frequency, and transmitting the signals at the same time, by using a hybrid beamforming method combining analog beamforming and digital precoding, the counterpart devices being counterpart radio communication devices; and
a control unit to determine a number of transmission array(s) to be allocated to each of the counterpart devices and a number of transmission(s) of reference signal(s) to be transmitted to each of the counterpart devices on the basis of channel state information fed back from each of the counterpart devices.

2. The radio communication device according to claim 1, wherein, to a new counterpart device to which the number of transmission array(s) and the number of reference signal(s) to be transmitted have not been allocated, the control unit allocates the number of transmission array(s) and the number of transmission(s) of reference signal(s) on the basis of a maximum number of streams supported by the new counterpart device, obtains the channel state information therefrom, and then determines the number of transmission array(s) and the number of transmission(s) of reference signal(s) on the basis of the obtained channel state information.

3. The radio communication device according to claim 1 or 2, wherein the control unit additionally allocates a number of transmission arrays and a number of transmission(s) of reference signal(s) to the counterpart devices at a timing when a predetermined condition is satisfied.

4. The radio communication device according to claim 3, wherein the control unit changes the condition on the basis of the channel state information.

5. The radio communication device according to claim 4, wherein the control unit obtains a variance of a value indicating a channel state obtained from the channel state information, and changes the condition when the variance is equal to or larger than a threshold.

6. The radio communication device according to any one of claims 1 to 5, wherein the control unit further determines the number of reception arrays to be allocated to each of the counterpart devices on the basis of the channel state information.

7. A radio communication method for a radio communication device capable of spatial multiplexing and transmission to a plurality of counterpart devices by using a hybrid beamforming method, the counterpart devices being counterpart radio communication devices,
the radio communication method comprising:
a step of determining a number of transmission array(s) and a number of transmission(s) of reference signal(s) to each of the counterpart devices on the basis of channel state information fed back from each of the counterpart devices.
